# EUROPÄISCHE PATENTSCHRIFT

(11) **EP 1 487 600 B1**
(45) Veröffentlichungstag und Bekanntmachung des Hinweises auf die Patenterteilung: **21.12.2005**
(21) Anmeldenummer: 03712090.4
(22) Anmeldetag: 25.03.2003
(51) Int. Cl.: B23B 5/16

(54) **VORRICHTUNG ZUM SCHÄLEN VON ROHREN AUS KUNSTSTOFF**
DEVICE FOR PLANING TUBES MADE FROM PLASTIC
DISPOSITIF DE RABOTAGE DE TUYAUX EN PLASTIQUE

(30) Priorität: 26.03.2002 DE 10213730
(43) Veröffentlichungstag der Anmeldung: 22.12.2004
(73) Patentinhaber: Friatec Aktiengesellschaft, 68229 Mannheim (DE)
(72) Erfinder: BAIER, Ralf, 68229 Mannheim (DE); HAGER, Martin, 69493 Hirschberg (DE)
(74) Vertreter: Schmitt, Meinrad
(86) Internationale Anmeldenummer: PCT/EP2003/003082
(87) Internationale Veröffentlichungsnummer: WO 2003/080276

(56) Entgegenhaltungen:
- EP-A- 1 112 794
- FR-A- 2 824 501
- US-A- 1 505 205

## Beschreibung

Die Erfindung bezieht sich auf eine Schälvorrichtung für Rohre aus Kunststoff gemäß der im Oberbegriff des Patentanspruchs 1 angegebenen Merkmale.

Aus der EP 1 112 794 A ist eine derartige Schälvorrichtung bekannt, welche ein Oberteil und ein Unterteil aufweist, zwischen welchen Kunststoff-Rohre mit unterschiedlichen Außendurchmessern festspannbar sind. Das Oberteil enthält einen Messerblock mit einem Messer zum Schälen bzw. Entfernen einer Schicht, insbesondere Oxydschicht, von der Oberfläche des Rohres. Das Oberteil und das Unterteil sind gegeneinander translatorisch verstellbar, wobei Arretierelemente zwecks Arretierung des Unterteils bezüglich des Oberteils vorhanden sind. Eine Schwenkbarkeit des Unterteils bezüglich des Oberteils um eine Schwenkachse ist nicht vorgesehen. Das Oberteil und das Unterteil sind schraubzwingenartig relativ zueinander mittels einer Gewindespindel bewegbar. Der Messerblock weist zwischen zwei axial beabstandeten Führungsrollen ein Schneidwerkzeug bzw. Messer auf, wobei Führungsrollen des Oberteils sowie weitere Führungsrollen des Unterteils auf der Rohroberfläche aufliegen. Zum Schälen des Rohres wird die Vorrichtung manuell um die Längsachse des Rohres gedreht.

Ferner ist aus der US 1 505 205 A ein Schneidgerät mit einem Schneidmesser zum Abschneiden von Rohren bekannt. Das Schneidgerät enthält ein Unterteil und ein Oberteil, welches um eine zur Längsachse eines zwischen dem Unterteil und Oberteil festgespannten Rohres parallele Schwenkachse schwenkbar ist. Zur Schwenkung des Oberteils und zum Festspannen des Rohres ist eine Gewindespindel vorgesehen, welche in einer Gewindeführung des Unterteils drehbar angeordnet ist. Die Länge der Gewindespindel ist entsprechend dem maximalen Außendurchmesser der zu verarbeitenden Rohr vorgegeben, wodurch eine nicht unerhebliche Bauhöhe des Schälgeräts bedingt ist.

Des Weiteren ist aus der DE 93 05 220 U eine Schälvorrichtung bekannt, deren Oberteil eine Führungssäule mit einer drehbaren Gewindehülse enthält, in welche eine Verstellspindel des Unterteils mit einem Außengewinde eingreift. Durch Drehen der Gewindehülse wird über die genannte Verstellspindel das Unterteil bezüglich des Oberteils translatorisch zur Anpassung an den jeweiligen Außendurchmesser des zu bearbeitenden Rohres verstellt. Zum Schälen des Rohres wird die Schälvorrichtung manuell um die Längsachse des Rohres gedreht, wobei in Folge der Anordnung der genannten Führungsrollen in einem bestimmten Vorschubwinkel die Vorrichtung einen axialen Vorschub in Richtung der Längsachse des Rohres erfährt. Aufgrund der Führungssäule mit der Gewindehülse zur Einstellung des Unterteils weist die Vorrichtung eine recht große Bauhöhe auf. Da der translatorische Verstellweg des Unterteils bezüglich des Oberteils entsprechend dem maximalen Außendurchmesser oder den Nennweiten vorgegeben sein muss, wäre die vorbekannte Vorrichtung für relativ große Nennweiten bzw. Außendurchmesser groß und massiv auszubilden, wodurch in der Praxis eine schwierige und umständliche Handhabung bedingt wäre. Beim Festspannen der Vorrichtung auf einem Rohr können sich Montagefehler in Folge von Deformationen oder Unrundheiten der Rohroberfläche ergeben, insbesondere in Folge einer zu geringen Festspannung der Vorrichtung, wobei eine ungleichmäßige oder gar unvollständige Entfernung der Oberflächenschicht bzw. Oxydschicht zu befürchten ist.

Hiervon ausgehend liegt der Erfindung die Aufgabe zugrunde, die Vorrichtung der genannten Art dahingehend auszubilden, dass bei einfacher und funktionssicherer Konstruktion eine kompakte und einfach zu handhabende Bauweise erreicht wird. Die Vorrichtung soll insbesondere für vergleichsweise große Rohre bzw. Nennweiten ein geringes Bauvolumen und ein geringes Gewicht aufweisen und eine einfache Handhabung ermöglichen. Die Anpassung an unterschiedliche Außendurchmesser der Rohre soll schnell und problemlos durchführbar sein und die Montage und das Festspannen auf einem Rohr soll definiert und zuverlässig durchführbar sein.

Die Lösung dieser Aufgabe erfolgt gemäß der im Patentanspruch 1 angegebenen Merkmale.

Die vorgeschlagene Vorrichtung zeichnet sich durch eine kompakte Bauweise aus und besitzt eine geringe Bauhöhe, so dass sie auch bei Rohren mit vergleichweise großen Außendurchmessern in einfacher Weise handhabbar ist. Das Unterteil ist bezüglich des Oberteils um eine Schwenkachse aufklappbar und ist nach dem Aufschieben auf das Rohr in definierten Positionen entsprechend dem Außendurchmesser des jeweiligen Rohres bezüglich des Oberteils arretierbar. Aufgrund der Arretierung in definierten, dem Außendurchmesser des jeweils zu schälenden Rohres entsprechenden Positionen werden Montagefehler zuverlässig vermieden. Das Oberteil und das Unterteil enthalten miteinander in Eingriff stehende Verstellelemente, welche nach dem Aufklappen des Unterteils dessen Einstellung bezüglich des Oberteils in definierter Weise ermöglichen. Nachfolgend wird das Unterteil bezüglich des Oberteils zurückgeklappt bis die Arretierelemente miteinander in Eingriff gelangen und somit das Rohr definiert zwischen dem Oberteil und dem Unterteil eingespannt ist.

Die Vorrichtung enthält somit ein verstellbares Gelenk, welches zum einen die gegenseitige Einstellung des Unterteils und des Oberteils entsprechend vorgegebener Nennweiten oder Außendurchmessern der Rohre ermöglicht und zum anderen in Kombination mit den Arretierungselementen ein definiertes Aufspannen auf dem Rohr mit hoher Funktionssicherheit ermöglicht. Die erfindungsgemäße Vorrichtung ist ein Schälgerät mit geringer Bauhöhe und kann selbst bei Rohren mit großen Nennweiten und/oder bei schwierigen Montagebedingungen, wie in einem Graben einer in der Erde verlegten Rohrleitung, problemlos zum Einsatz gelangen. Das Oberteil enthält einen schwenkbaren Messerblock mit dem Schälmesser und einem Betätigungselement, insbesondere einem Betätigungshebel. Zum Schälen der Rohroberfläche wird über das Betätigungselement manuell das Messer an die Rohroberfläche gepresst und gleichzeitig die Vorrichtung zum Schälen des Kunststoff-Rohres um dessen Längsachse gedreht. Die Vorrichtung ermöglicht, nur einen bestimmten Bereich auf dem Umfang des Rohres, insbesondere die Auflagefläche eines mit dem Rohr zu verbindenden Sattelstücks, zu schälen, wobei eine Ründschälung nicht erforderlich ist und somit eine unnötige Schwächung des Rohres vermieden wird.

Besondere Ausgestaltungen und Weiterbildungen der Erfindung sind in den Unteransprüchen sowie der nachfolgenden Beschreibung eines Ausführungsbeispiels angegeben.

Die Erfindung wird nachfolgend eines besonderen, in der Zeichnung dargestellten, Ausführungsbeispiels näher erläutert, ohne dass insoweit eine Beschränkung erfolgt. Es zeigen:
- Fig. 1: eine axiale Ansicht der Vorrichtung,
- Fig. 2: eine Ansicht der Vorrichtung ähnlich Fig. 1, wobei das Unterteil bezüglich des Oberteils für den kleinsten Rohraußendurchmesser eingestellt ist,
- Fig. 3: eine perspektivische Darstellung der Vorrichtung,
- Fig. 4: teilweise eine Ansicht in Blickrichtung IV gemäß Fig. 1,
- Fig. 5: teilweise eine Ansicht in Blickrichtung V gemäß Fig. 1,
- Fig. 6: vergrößert das Detail VI gemäß Fig. 1.

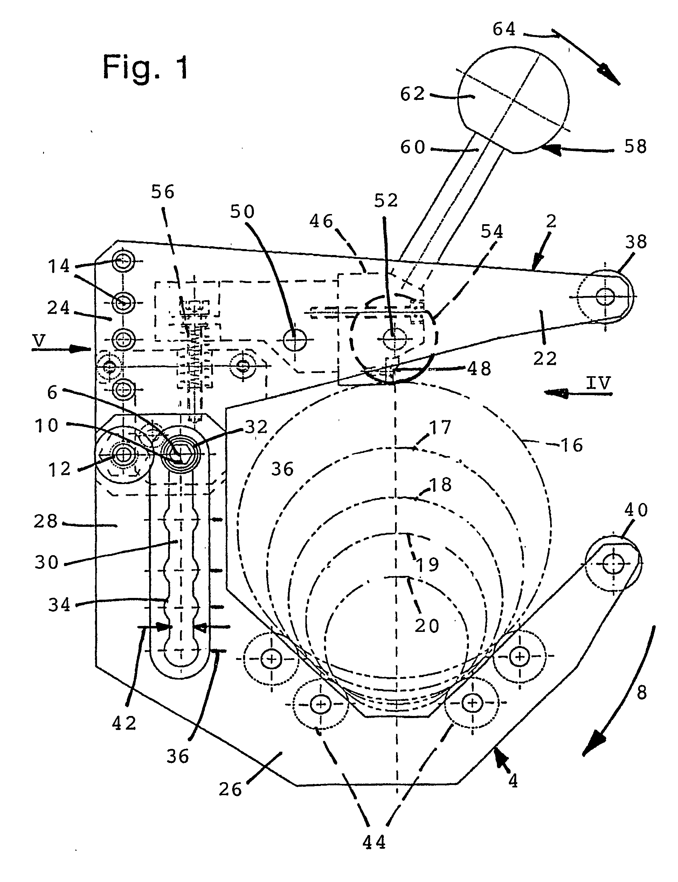

Fig. 1 zeigt eine axiale Ansicht der Vorrichtung mit einem Oberteil 2 und einem Unterteil 4. Das Unterteil 4 ist bezüglich des Oberteils 2 um eine Schwenkachse 6 in Richtung des Pfeiles 8 aufklappbar, wobei die Schwenkachse 6 durch einen mit dem Unterteil 4 verbundenen Schwenkbolzen 10 definiert ist. Im Unterteil 4 ist ferner ein erstes Arretierelement 12 zugeordnet, mit welchem weitere Arretierelemente 14 korrespondieren. Das erste Arretierelement 12 ist bevorzugt als ein axial bewegbarer Arretierbolzen ausgebildet, welcher gemäß Fig. 1 aus der Zeichenebene nach vorn bewegbar ist und bevorzugt mittels eines Federelements in Richtung auf die Zeichenebene bzw. das Oberteil 2 vorgespannt ist. Die weiteren Arretierelemente 14 des Oberteils 2 sind zweckmäßig als Rasterungen oder Rastbohrungen ausgebildet, in welche der Arretierbolzen 12 eingreifen kann. In der dargestellten Position rastet das erste Arretierelement bzw. des Spitze des Arretierbolzens 14 in die hinter dem Unterteil 4 liegende, hier nicht zu erkennende Rasterung des Oberteils 2 ein. Wie ersichtlich, ist das Unterteil 4 bezüglich des Oberteils 2 für den größtmöglichen Durchmesser eines mit gestrichelten Linien angedeuteten Rohres 16 definiert eingestellt. Mittels der gestrichelten Linien 17 bis 19 sind Rohre mit kleineren Außendurchmessern angedeutet. Das Oberteil 2 und das Unterteil 4 enthalten die in der Zeichnung dargestellten plattenförmige Elemente. Korrespondierend zu diesen und axial beabstandet enthalten das Oberteil 2 und das Unterteil 4 weitere plattenförmige Elemente, wie es weiter unten noch erklärt wird.

Das Oberteil 2 ist näherungsweise L-förmig ausgebildet und enthält einen oberen Schenkel 22 und einen seitlichen Schenkel 24. Das Unterteil 4 enthält einen V-förmig abgewinkelten unteren Schenkel 26 und einen seitlichen Schenkel 28. Die beiden genannten seitlichen Schenkel 24 und 28 sind einander überlappend angeordnet, wobei der seitliche Schenkel 28 des Unterteils 4 ein Einstellelement 30 aufweist, welches bevorzugt als eine Längsnut ausgebildet ist. Mit dem Einstellelement 30 korrespondiert das Einstellelement bzw. der Schwenkbolzen 10 des Oberteils 2, wobei in bevorzugter Weise der mit dem Oberteil 2 verbundene Schwenkbolzen 10 durch die Längsnut 30 durchgreift. Im Bereich der hier sichtbaren Oberfläche des Unterteils 4 bzw. dessen seitlichen Schenkels 28 besitzt der Schwenkbolzen 10 Anlageflächen 32 derart, dass eine sichere Führung in der Längsnut 30 gewährleistet ist. Das Einstellelement 30 bzw. die Längsnut des seitlichen Schenkels 28 weisen Erweiterungen 34 auf, welchen Markierungen 36 entsprechend vorgegebenen und/oder standardisierten Rohraußendurchmessern zugeordnet sind. So können die Markierungen 36 beispielsweise die Angaben der Außendurchmesser von standardisierten Rohren wie 110, 90, 63 und 50 mm enthalten.

Durch Herausziehen des ersten Arretierelements 12 bzw. Arretierbolzens aus den weiteren Arretierelementen 14 kann die definierte Verbindung oder Kopplung des Unterteils 4 bezüglich des Oberteils 2 gelöst werden, und nachfolgend das Unterteil 4 in Richtung des Pfeiles 8, gemäß Zeichnung nach unten um die Schwenkachse 6 bzw. den Schwenkbolzen 10 geschwenkt werden, und zwar beispielsweise um einen vorgegebenen Winkel, insbesondere in der Größenordnung von 45°. Ausschließlich in der derart aufgeschwenkten oder aufgeklappten Position des Unterteils 4 kann dieses bezüglich des Oberteils 2 verschoben werden, so dass eine der den Markierungen 36 zugeordneten Erweiterungen 34 sich im Bereich des Schwenkbolzens 10 befindet. Ist das Unterteil aus der genannten aufgeschwenkten Position, welche die Einstellposition bildet, wieder um einen vorgegebenen kleinen Winkelbereich zurückgeschwenkt, so kann eine gegenseitige Verstellung und/oder translatorische Bewegung des Unterteils 4 und des Oberteils 2 nicht mehr durchgeführt werden, sondern nur noch die Schwenk- oder Klappbewegung. Nunmehr kann die Vorrichtung auf ein Rohr der entsprechenden Dimension aufgeschoben werden und nachfolgend das Unterteil 4 entgegen der Richtung des Pfeiles 8 zurückgeklappt werden bis das erste Arretierelement 12 in das korrespondierende weitere Arretierelement bzw. die Rasterung 14 des Oberteils 2 einrastet.

Zum Zurückschwenken bzw. Zurückklappen enthalten das Oberteil 2 und das Unterteil 4 in vorteilhafter Weise an ihren freien Enden des oberen bzw. unteren Schenkels 2 bzw. 26 Handgriffe 38, 40. Die Vorrichtung wird somit in einfacher Weise und definiert auf dem jeweiligen Rohr des vorgegebenen Außendurchmessers festgespannt, wobei mittels der genannten Arretierelemente 12, 14 eine definierte Fixierung vorgegeben und aufrechterhalten wird. In besonders zweckmäßiger Weise besitzt der Schwenkbolzen 10 im Bereich der Längsnut 30 seitliche Abflachungen, welche zumindest näherungsweise gleich groß sind wie die Breite 42 der Längsnut 30. Nach dem Lösen der Arretiermittel 12, 14, insbesondere nach dem Herausziehen des Arretierbolzens aus der Rasterung des Oberteils wird das Unterteil 4 in Richtung des Pfeiles 8 aufgeklappt und vom eingespannten Rohr abgenommen, um nachfolgend auf eine andere Rohrdimension bzw. auf einen anderen Rohrdurchmesser durch Relativverschiebung bezüglich des Oberteils 2 eingestellt zu werden. Aufgrund der genannten Abflachung einerseits und der mit den Markierungen 36 des Unterteils 4 korrespondierenden Erweiterungen 34 der Längsnut 30 ist ein Zurückklappen oder Zurückschwenken des Unterteils 4 ausschließlich im Bereich der den genannten Markierungen 36 zugeordneten Erweiterungen der Längsnut 30 durchführbar.

Der V-förmig abgewinkelte untere Schenkel 26 enthält vier, paarweise angeordnete Laufrollen 44 derart, dass die Rohre mit den vergleichsweise kleinen Außendurchmessern, wie insbesondere gemäß der Linien 18 bis 20, an den beiden gemäß Zeichnung unteren Laufrollen anliegen, während Rohre mit größeren Außendurchmessern, beispielsweise gemäß der Linien 16, 17 an den beiden gemäß Zeichnung oberen Laufrollen 44 anliegen. Somit ist selbst bei vergleichsweise großen Unterschieden der Rohraußendurchmesser jeweils eine sichere Abstützung bzw. ein sicheres Festspannen gewährleistet.

Das Oberteil 2 weist insbesondere im Bereich seines oberen Schenkels 22 einen Messerblock 46 auf. Der Messerblock 46 enthält ein bevorzugt aus Hartmetall bestehendes Schälmesser 48, welches auf der Oberfläche des jeweils festgeklemmten Rohres angreift und mit welchem eine vorgegebene Schicht der Rohroberfläche entfernbar ist. Der Messerblock 46 ist in bevorzugter Weise um eine Schwenkachse 50 im Oberteil 2 schwenkbar gelagert und in diesem mittels einer Druckfeder 56 elastisch abgestützt. Des Weiteren weist das Oberteil 2 wenigstens eine um eine Achse 52 drehbare Führungsrolle 54 auf, welche auf der Oberfläche des festgespannten Rohres aufliegt. Der Durchmesser der Führungsrolle 54 ist derart vorgegeben, dass die Schneidkante des Schälmessers 48 in die Außenfläche des festgespannten Rohres in einer vorgegebenen Tiefe zum Abschälen einer Oberflächenschicht einschneiden kann. Mit anderen Worten, die Schneidkante des Schälmessers 48 weist zur Drehachse 52 einen vorgegebenen Abstand auf, der größer ist als der Radius der Führungsrolle 54. In vorteilhafter Weise ist das Schälmesser 48 in axialer Richtung zwischen der hier zu erkennenden Führungsrolle 54 und einer weiteren hinter der Zeichenebene liegenden Führungsrolle angeordnet. Mittels einer Druckfeder 56, welche einerseits im Oberteil 2 und andererseits im Messerblock 46 abgestützt ist wird dieser um die Schwenkachse 50 in Richtung auf die Rohroberfläche gedrückt.

Mit dem schwenkbaren Messerblock 46 ist ferner ein Betätigungselement 58 verbunden, weiches hier als ein Betätigungshebel 60 mit einem Handgriff 62 ausgebildet ist. Zum Schälen des Rohres ergreift ein Monteur das Betätigungselement bzw. dessen Handgriff 62 und dreht die Vorrichtung in Richtung des Pfeiles 64 um die Längsachse des eingespannten Rohres. Hierbei wird das bevorzugt aus Hartmetall bestehende Schälmesser 48 in die Rohroberfläche gedrückt und folglich die Schicht oder Oxydschicht von der Rohr- oberfläche entfernt.

Es sei hier besonders darauf verwiesen, dass mit der erfindungsgemäß vorgeschlagenen Vorrichtung eine vollständige Rundumschälung, also eine über den gesamten Umfang des Rohres erfolgende Schälung nicht notwendig ist, sondern in besonders vorteilhafter Weise nur ein vorgegebener Bereich der Rohroberfläche geschält werden kann, so dass ein unnötige Schwächung des Rohres vermieden wird. An diesem Bereich der Rohroberfläche kann nachfolgend insbesondere ein Sattelstück befestigt und/oder angeschweißt werden. Entsprechend der axialen Abmessungen des zu schälenden Bereiches und/oder des Sattelstücks können nach einem ersten Schälhub, der über einen vorgegebenen Winkelbereich um die Rohrlängsachse durchgeführt wurde, ein oder mehrere weitere Schälhübe durchgeführt werden. Hierzu wird die Vorrichtung jeweils an den Anfangspunkt des jeweiligen Schälhubes zurück gedreht und anschließend axial bzw. in Schälrichtung verschoben. Es versteht sich, dass der nächste Schälhub derart ausgeführt wird, dass sich die Schälungen jeweils überlappen und somit eine axial durchgehende Schälung bzw. ein durchgängiger Spanabtrag in dem gewünschten Schälbereich sichergestellt ist. Nach vollständiger Schälung in dem vorgegebenen Bereich, insbesondere der Auflagefläche eines Sattelstücks auf dem Rohr, wird die Vorrichtung von dem festgespannten Rohr abgenommen. Hierzu wird zumindest das erste erläuterte Arretierelement und ggf. ein auf der Rückseite der Vorrichtung angeordnetes entsprechendes Arretierelement bzw. ein Arretierbolzen gelöst, so dass das Unterteil 4 und das Oberteil 2 auseinandergeklappt werden können und die Vorrichtung vom Rohr abgenommen werden kann.

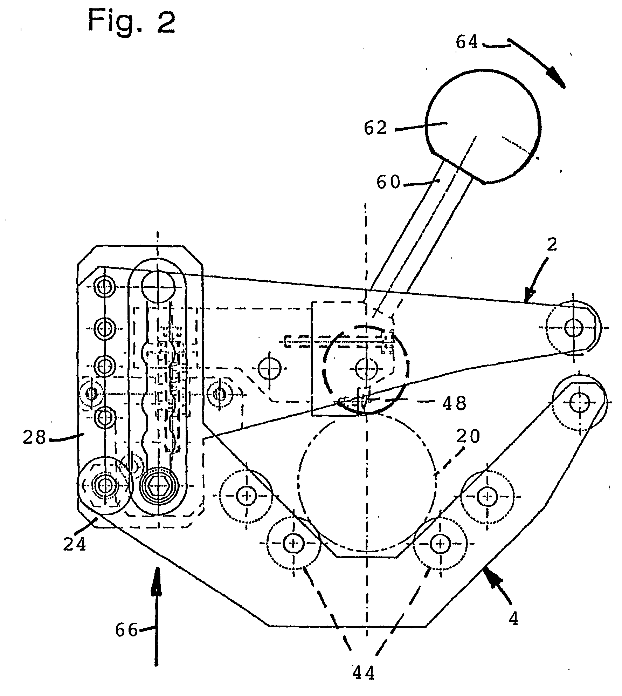

Fig. 2 zeigt eine axiale Ansicht der Vorrichtung, welche auf dem einen geringen Außendurchmesser aufweisenden Rohr 20 festgespannt ist. Wie ersichtlich, ist das Unterteil 4 mit seinem seitlichen Schenkel 28 bezüglich des Oberteils 2 gemäß Zeichnung in Richtung des Pfeiles 66 nach oben verschoben, wobei der seitliche Schenkel 28 den dahinter liegenden seitlichen Schenkel 24 des Oberteils 2 weitestgehend überlappt. Das untere Laufrollenpaar 44 liegt an der Oberfläche des Rohres 20 an und durch Erfassen des Handgriffs 62 und Drehen in Pfeilrichtung 64 kann wiederum eine Schicht vorgegebener Schichtdicke mittels des Schälmessers 48 entfernt werden.

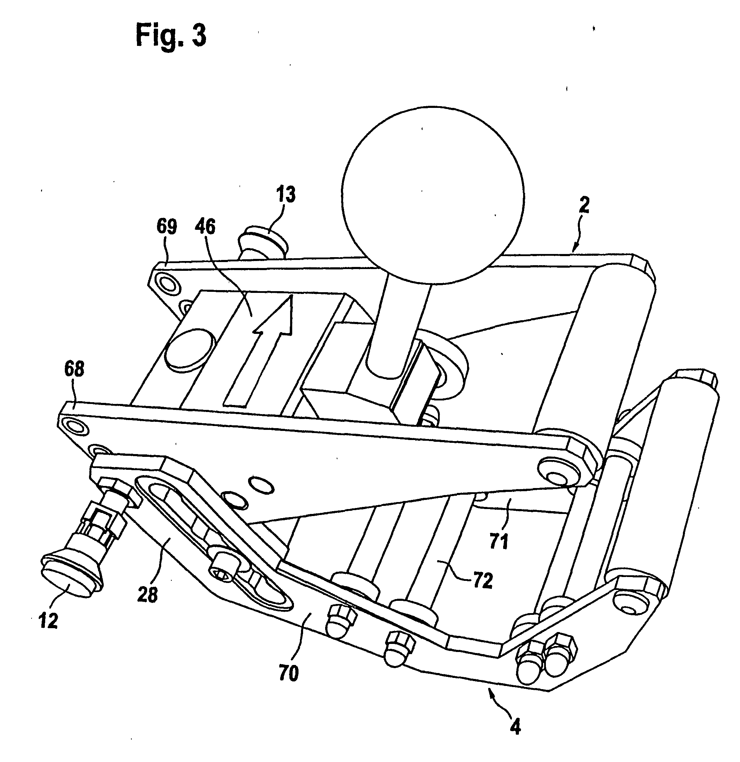

Fig. 3 zeigt in einer perspektivischen Darstellung die Vorrichtung, wobei im Vergleich mit Fig. 1 und Fig. 2, gemäß welchen das Unterteil 4 bezüglich des Oberteils 2 für den größten bzw. kleinsten Rohraußendurchmesser eingestellt ist, nunmehr das Unterteil 4 eine Zwischenposition einnimmt. Wie ersichtlich, enthält das Oberteil 2 zwei im wesentlichen übereinstimmend ausgebildete, axial beabstandet und in geeigneter Weise miteinander verbundene Platten 68, 69, zwischen welchen der schwenkbare Messerblock 46 angeordnet ist. Entsprechend enthält das Unterteil 4 zwei im wesentlichen übereinstimmend ausgebildete, axial beabstandet angeordnete und in geeigneter Weise miteinander verbundene Platten 70, 71. Das Oberteil 2 bzw. dessen Platten 68, 69 befinden sich bei dieser Ausführungsform zwischen den seitlichen Schenkeln der Platten 70, 71 des Unterteils 4. Die ersten Arretierelemente 12, 13 sind an den seitlichen Schenkeln der Platten 70, 71 befestigt. Die Laufrollen 44 sind auf Gewindebolzen 72 drehbar gelagert, welche zur Verbindung der beiden Platten 70, 71 vorgesehen sind. Auf jedem dieser Gewindebolzen 72 ist jeweils nahe der Platten 70, 71 jeweils eine Laufrolle angeordnet.

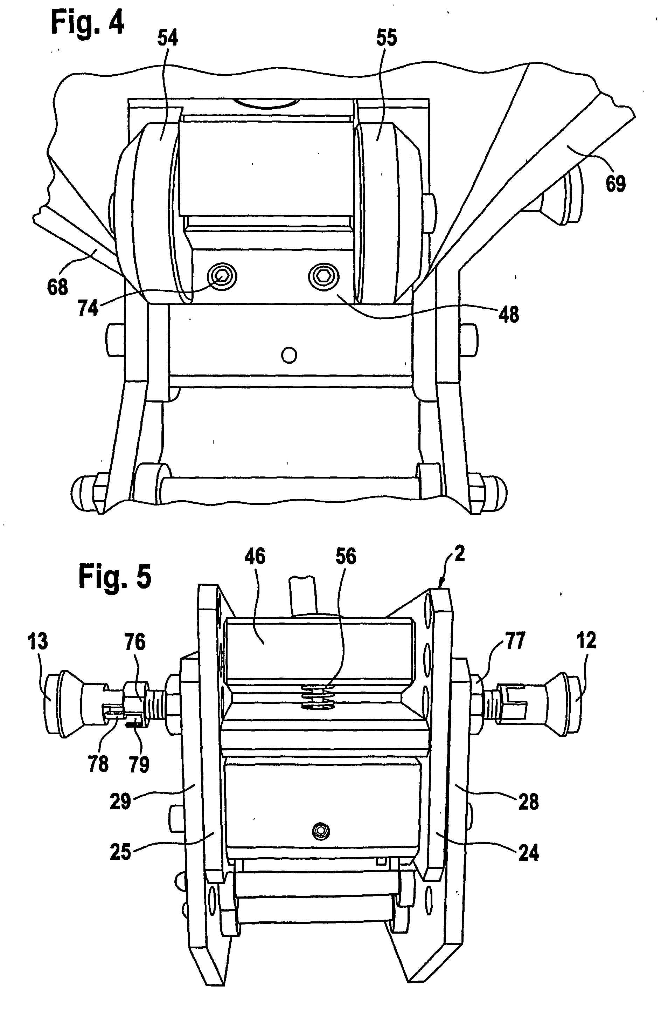

Fig. 4 zeigt in einer perspektivischen Darstellung teilweise das Schälgerät in Blickrichtung IV gemäß Fig. 1, wobei der zwischen den beiden Platten 68, 69 des Oberteils schwenkbar angeordnete Messerblock 46 gut zu erkennen ist. Der Messerblock 46 enthält zwei axial beabstandet angeordnete Führungsrollen 54, 55, welche nach dem Festspannen der Vorrichtung auf der Rohroberfläche aufliegen, Das Schälmesser 48 besteht bevorzugt aus Hartmetall und ist mittels Schrauben 74 auswechselbar auf dem Messerblock 46 befestigt.

Fig. 5 zeigt in einer perspektivischen Darstellung das Schalgerät in Blickrichtung V gemäß Fig. 1. Die seitlichen Schenkel 28, 29 bzw. dessen Platten sind parallel zu den seitlichen Schenkeln 24, 25 angeordnet. Die erwähnte Druckfeder 56 zur elastischen Abfangung des Messerblocks 48 im Oberteil 2 ist hier gut zu erkennen. In vorteilhafter Weise ist die Druckfeder 51 zur Vorgabe der elastisch nachgiebigen Auflage und/oder Vorspannung auf der Rohroberfläche einstellbar vorgesehen. Gemäß Zeichnung ist das links dargestellte Arretierelement bzw. der Arretierbolzen 12 aus seiner Halterung 76 herausgezogen, so dass die Kopplung mit der zugeordneten Rasterung im Oberteil 2 aufgehoben ist. Hingegen ist das gemäß Zeichnung rechte Arretierelement bzw. der Arretierbolzen 13 in die zugeordnete Halterung 77 eingeschoben, wobei die Kopplung mit dem zugeordneten weiteren Arretierelement des Oberteils 2 bzw. dessen seitlichen Schenkel 25 hergestellt ist. Den Arretierbolzen 12, 13 sind hier nicht weiter dargestellte Federn derart zugeordnet, dass die Arretierbolzen 12, 13 nach innen in Richtung auf die zugeordneten Schenkel 24, 25 bzw. der dort vorgesehenen Rasterungen gezogen werden. Die Arretierbolzen 12, 13 und die Hatterungen 76, 77 enthalten miteinander korrespondierende Eingreifelemente 78, 79. In der gemäß Zeichnung links dargestellten Position des Arretierbolzens 12 befinden sich die genannten Eingriffelemente 78, 79 außer Eingriff wobei der Arretierbolzen 12 um seine Achse bezüglich des Eingriffelements 79 der Halterung 76 gedreht ist und somit die Entkopplung aufrecht erhalten ist, damit das Aufklappen und das Einstellen des Unterteils 4 gegenüber dem Oberteil 2 problemlos durchgeführt werden kann.

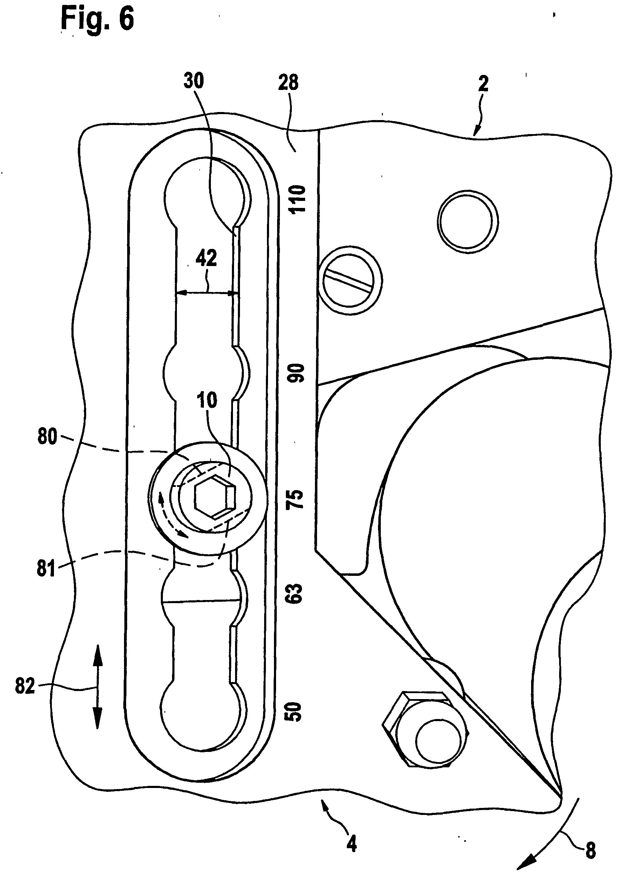

Schließlich zeigt Fig. 6 vergrößert das Detail VI gemäß Fig. 1. Das als Längsnut ausgebildete Einstellelement 30 im seitlichen Schenkel 28 weist die genannten Markierungen auf, welche hier als Durchmesserangaben 50, 63, 75, 90 und 110 der zu schälenden Rohre angegeben sind. Der Schwenkbolzen 10 befindet sich im Bereich der Markierung der einem Rohraußendurchmesser von 75 mm zugeordneten Position, in welcher das Unterteil 4 bezüglich des Oberteils 2 geschwenkt werden kann. Wie mit strichpunktierten Linien 80, 81 angedeutet, weist der Schwenkbolzen 10 im Bereich der Längsnut 30 Abflachungen auf. Diese Abflachungen 80, 81 sind in einem Abstand zueinander angeordnet, welcher näherungsweise gleich groß ist wie die Breite 42 der Längsnut. Ist das Unterteil 4 in Richtung des Pfeiles 8 um die Schwenkachse 10 soweit geschwenkt, dass die Abflachungen 80, 81 im wesentlichen parallel zur Längsnut 30 ausgerichtet sind, kann das Unterteil 4 bezüglich des Oberteils 2 in Richtung des Doppelpfeils 82 zwecks Einstellung auf den gewünschten Rohraußendurchmesser verschoben werden.

### Bezugszeichen

- 2: Oberteil
- 4: Unterteil
- 6: Schwenkachse
- 8: Pfeil
- 10: Schwenkbolzen
- 12, 13: erstes Arretierelement / Arretierbolzen von 4
- 14: weiteres Arretierelement / Rasterung von 2
- 16: Rohr, gestrichelte Linie
- 17, 20: weitere Rohre / gestrichelte Linien
- 22: oberer Schenkel von 2
- 24, 25: seitlicher Schenkel von 2
- 26: unterer Schenkel von 4
- 28, 29: seitlicher Schenkel von 4
- 30: Einstellelement / Längsnut in 28
- 32: Anlagefläche / Unterlegscheibe von 10
- 34: Erweiterung
- 36: Markierung
- 38, 40: Handgriff
- 42: Breite von 30
- 44: Laufrolle
- 46: Messerblock
- 48: Schälmesser
- 50: Schwenkachse von 46
- 52: Drehachse
- 54, 55: Führungsrolle
- 56: Druckfeder
- 58: Betätigungselement
- 60: Betätigungshebel
- 62: Handgriff
- 64,66: Pfeil
- 68, 69: Platte von 2
- 70, 71: Platte von 4
- 72: Gewindebolzen
- 74: Schraube
- 76, 77: Halterung
- 78, 79: Eingriffelement
- 80, 81: Abflachung / strichpunktierte Linie
- 82: Doppelpfeil

## Patentansprüche

1. Schälvorrichtung für Rohre aus Kunststoff, enthaltend ein Oberteil (2) mit einem ein Schälmesser (48) aufweisenden Messerblock (46) und ein Unterteil (4), welche gegeneinander translatorisch verstellbar sind, und ferner enthaltend ein Betätigungselement (58) sowie Arretierelemente (12, 14), mittels welchen das Unterteil (4) bezüglich des Oberteils (2) in vorgegebenen Stellungen arretierbar ist, wobei die Vorrichtung auf Rohren mit unterschiedlichen Durchmessern festspannbar ist und wobei durch Drehen der Vorrichtung um das zwischen dem Oberteil (2) und dem Unterteil (4) angeordnete Rohr mittels des Schälmessers (48) eine Schicht von der Oberfläche des Rohres entfernbar ist,
**dadurch gekennzeichnet, dass** das Unterteil (4) bezüglich des Oberteils (2) um eine Schwenkachse (6) schwenkbar angeordnet ist, wobei im wesentlichen quer zu dieser das Oberteil (2) und das Unterteil (4) gegeneinander translatorisch verstellbar sind, dass der Messerblock (46) auf dem Oberteil (2) um eine Schwenkachse (50) schwenkbar angeordnet ist und dass der Messerblock (46) mittels einer Druckfeder (56) im Oberteil (2) abgestützt ist oder mit dem Messerblock (46) das Betätigungselement (58) verbunden ist.

2. Vorrichtung nach Anspruch 1, **dadurch gekennzeichnet, dass** die Schwenkachse (6) durch einen Schwenkbolzen (10) definiert ist, welcher in zueinander beabstandet angeordneten Erweiterungen (34) in einer Längsnut (30) des Unterteils (4) angeordnet werden kann.

3. Vorrichtung nach Anspruch 2, **dadurch gekennzeichnet, dass** der Längsnut (30) Markierungen (36) entsprechend vorgegebener Rohraußendurchmesser zugeordnet sind.

4. Vorrichtung nach Anspruch 2 oder 3, **dadurch gekennzeichnet, dass** das Oberteil (2) und das Unterteil (4) einander zugeordnete seitliche Schenkel (24, 28) aufweisen, welche zum einen die Schwenkachse (6) und/oder den Schwenkbolzen (10) und zum anderen die korrespondierende Längsnut (30) mit den Erweiterungen (34) aufweisen.

5. Vorrichtung nach einem der Ansprüche 1 bis 4, **dadurch gekennzeichnet, dass** das erste Arretierelement als ein bewegbarer Arretierbolzen (12) ausgebildet ist und dass das weitere Arretierelement eine Rasterung (14) enthält, in welche der Arretierbolzen (12) eingreift bzw. aus welcher der Arretierbolzen (12) herausnehmbar ist.

6. Vorrichtung nach einem der Ansprüche 1 bis 5, **dadurch gekennzeichnet, dass** das erste Arretierelement (12) und das weitere Arretierelement (14) jeweils auf einem der seitlichen Schenkel (24, 28) des Oberteils (2) bzw. des Unterteils (4) angeordnet sind.

7. Vorrichtung nach einem der Ansprüche 1 bis 6, **dadurch gekennzeichnet, dass** das Oberteil (2) zwei axial beabstandet angeordnete Platten (68, 69) enthält, wobei der schwenkbare Messerblock (48) zwischen diesen beiden Platten (68, 69) angeordnet ist, und/oder dass das Unterteil (4) zwei axial beabstandet angeordnete und miteinander verbundene Platten (70, 71) enthält, wobei Laufrollen (44) des Unterteils (4) bevorzugt auf zur Verbindung der Platten (70, 71) vorgesehenen Bolzen (72) angeordnet sind.

8. Vorrichtung nach einem der Ansprüche 1 bis 7, **dadurch gekennzeichnet, dass** das Betätigungselement (58) als ein Betätigungshebel (60) ausgebildet ist.

9. Vorrichtung nach einem der Ansprüche 1 bis 8, **dadurch gekennzeichnet, dass** das Unterteil (4) bezüglich des Oberteils (2) ausschließlich bei gelösten Arretierelementen (12, 14) und in einer aufgeklappten Position bezüglich des Oberteils (2) translatorisch verstellbar ist.

## Claims

1. A device for planing tubes made from plastic, including an upper part (2) with a knife block (46) having a planing knife (48), and a lower part (4), which can be adjusted in translatory manner towards one another, and further including an actuating element (58) and locking elements (12, 14), by means of which the lower part (4) is lockable in predefined positions relative to the upper part (2), wherein the device can be clamped on tubes of different diameters and wherein a layer of the tube's surface can be removed by means of a planing knife (48) by rotating the device about the tube arranged between the upper part (2) and the lower part (4), **characterised in that**
the lower part (4) is arranged so as to be capable of swivelling about a swivel axis (6), wherein the upper part (2) and the lower part (4) can be adjusted in translatory manner towards one another essentially perpendicularly to this swivel axis, that the knife block (46) is arranged on the upper part (2) so as to be capable of swivelling about a swivel axis (50), and that the knife block (46) is braced by a compression spring (56) in the upper part (2) or that the actuating element (58) is connected to the knife block (46).

2. The device as cited in claim 1, **characterised in that** the swivel axis (6) is defined by a swivel pin (10), which can be placed in enlargements arranged at a distance from each other in a longitudinal slot (30) in the lower part(4).

3. The device as cited in claim 2, **characterised in that** markings (36) are assigned to the longitudinal slot (30) according to a predefined outer diameter of the tube.

4. The device as cited in either of claims 2 or 3, **characterised in that** the upper part (2) and the lower part (4) have lateral legs (24, 28) assigned to one another, which have the swivel axis (6) and/or the swivel pin (10) on the one side and the corresponding longitudinal slot (30) with the expansions (34) on the other side.

5. The device as cited in any of claims 1 to 4, **characterised in that** the first locking element is constructed as a movable locking pin (12) and that the additional locking element contains a raster (14) in which the locking pin (12) engages and from which the locking pin (12) can be disengaged.

6. The device as cited in any of claims 1 to 5, **characterised in that** the first locking element (12) and the additional locking element (14) are each arranged on one of the lateral legs (24, 28) of the upper part (2) or the lower part (4).

7. The device as cited in any of claims 1 to 6, **characterised in that** the upper part (2) includes two axially separated plates (68, 69), wherein the swivelling knife block (48) is arranged between these two plates (68, 69) and/or that the lower part (4) includes two plates (70, 71) that are axially separated and connected to one another, wherein castors (44) on the lower part (4) are preferably arranged on pins (72) provided to connect the plates (70, 71).

8. The device as cited in any of claims 1 to 7, **characterised in that** the actuating element (58) is constructed as a control lever (60).

9. The device as cited in any of claims 1 to 8, **characterised in that** the lower part (4) is adjustable in translatory manner relative to the upper part (2) only when the locking elements (12, 14) are released and when it is in an open position relative to the upper part (2).

## Revendications

1. Dispositif de rabotage de tuyaux en matière plastique, comportant une partie supérieure (2), comprenant un bloc couteau (46) équipé d'une lame de rabotage (48), et une partie inférieure (4), qui sont réglables en translation l'une par rapport à l'autre, et comportant en outre un élément d'actionnement (58) ainsi que des éléments de blocage (12, 14) aux moyens desquels la partie inférieure (4) peut être bloquée dans des positions prédéfinies par rapport à la partie supérieure (2), ce dispositif pouvant être fixé sur des tuyaux de diamètres différents et une couche de la surface du tuyau pouvant être enlevée par rotation du dispositif autour du tuyau disposé entre la partie supérieure (2) et la partie inférieure (4) au moyen de la lame de rabotage (48),
**caractérisé en ce que** la partie inférieure (4) est disposée de manière pivotable par rapport à la partie supérieure (2) autour d'un axe de pivotement (6), la partie supérieure (2) et la partie inférieure (4) étant réglables l'une par rapport à l'autre en translation sensiblement transversalement à cet axe de pivotement, et que le bloc couteau (46) s'appuie par un ressort de compression (56) dans la partie supérieure (2) ou que l'élément d'actionnement (58) est relié au bloc couteau (46).

2. Dispositif selon la revendication 1, **caractérisé en ce que** l'axe de pivotement (6) est défini par un pivot (10) qui peut être disposé dans des extensions (34) disposées espacées les unes des autres d'une rainure longitudinale (30) de la partie inférieure (4).

3. Dispositif selon la revendication 2, **caractérisé en ce qu'**à la rainure longitudinale (36) sont associés des marquages (36) pratiqués en fonction des diamètres extérieurs prédéfinis des tuyaux.

4. Dispositif selon la revendication 2 ou 3, **caractérisé en ce que** la partie supérieure (2) et la partie inférieure (4) présentent des branches latérales (24, 28) associées les unes aux autres, qui comportent d'une part l'axe de pivotement (6) et/ou le pivot (10) et d'autre part la rainure longitudinale (30) correspondante avec les extensions (34).

5. Dispositif selon une des revendications 1 à 4, **caractérisé en ce que** le premier élément de blocage est réalisé sous forme d'une cheville de blocage mobile (12) et que l'autre élément de blocage comporte un cran (14) dans lequel s'engrène la cheville de blocage (12) ou d'où on peut sortir la cheville de blocage (12).

6. Dispositif selon une des revendications 1 à 5, **caractérisé en ce que** le premier élément de blocage (12) et l'autre élément de blocage (14) sont disposés chacun sur une des branches latérales (24, 28) de la partie supérieure (2) ou de la partie inférieure (4).

7. Dispositif selon une des revendications 1 à 6, **caractérisé en ce que** la partie supérieure (2) comporte deux plaques (68, 69) disposées espacées axialement, le bloc couteau pivotable (48) étant disposé entre ces deux plaques (68, 69), et/ou que la partie inférieure (4) comporte deux plaques (70, 71) disposées espacées axialement et reliées entre elles, deux rouleaux de roulement (44) de la partie inférieure (4) étant disposés de préférence sur des chevilles (72) prévues pour connecter les plaques (70, 71).

8. Dispositif selon une des revendications 1 à 7, **caractérisé en ce que** l'élément d'actionnement (58) est réalisé sous forme d'un levier d'actionnement (60).

9. Dispositif selon une des revendications 1 à 8, **caractérisé en ce que** la partie inférieure (4) est réglable en translation par rapport à la partie supérieure (2) exclusivement lorsque les éléments de blocage (12, 14) sont relâchés et dans une position rabattue vers le haut par rapport à la partie supérieure (2).
